# EUROPÄISCHE PATENTANMELDUNG

(11) **EP 4 779 539 A1**
(43) Veröffentlichungstag der Anmeldung: **22.07.2026**
(21) Anmeldenummer: 25216838.0
(22) Anmeldetag: 19.11.2025
(51) Int. Cl.: G06Q 10/0633, G06Q 10/087, G06Q 10/20, G06Q 50/02, G07C 5/00

(54) **COMPUTER-IMPLEMENTIERTES VERFAHREN ZUM ERSTELLEN EINES WARTUNGSABLAUFS FÜR EINE LANDWIRTSCHAFTLICHE ARBEITSMASCHINE**

(30) Priorität: 20.01.2025 DE 102025101765
(71) Anmelder: CLAAS E-Systems GmbH, 49201 Dissen (DE)
(72) Erfinder: Jathe, Benjamin, 33803 Steinhagen (DE); Itzek, Ralf, 48361 Beelen (DE); Hesse, Reinhard, 33775 Versmold (DE); Grunwald, Jörn, 33428 Marienfeld (DE); Pellengahr, Martin, 48167 Münster (DE); Niewöhner, Stephan, 48147 Münster (DE); Rüter, Sebastian, 33428 Harsewinkel (DE)
(74) Vertreter: CLAAS Gruppe

(57) **Zusammenfassung**

Die vorliegende Erfindung betrifft ein computer-implementiertes Verfahren (100) zum Erstellen eines Wartungsablaufs (240) für eine landwirtschaftliche Arbeitsmaschine (200), wobei eine Servicestation (S) zur Durchführung von Wartungsschritten an der landwirtschaftlichen Arbeitsmaschine (200) bereitsteht, das Verfahren (100) umfassend: Erfassen einer Wartungsmeldung (235) der landwirtschaftlichen Arbeitsmaschine (200), wobei die Wartungsmeldung (235) eine Maschinenkonfiguration umfasst; Ermitteln einer Teileliste (245) basierend auf der Wartungsmeldung (235), wobei die Teileliste (245) die für die Wartung benötigten Teile (250) umfasst; und Erstellen eines Wartungsablaufs (240), indem ein Wartungszeitfenster (300) der Servicestation (S) basierend auf einem Abgleich der benötigten Teile (250) mit in der Servicestation (S) vorhandenen Teilen (210, 215, 220) bestimmt wird.

## Beschreibung

Die vorliegende Erfindung betrifft ein computer-implementiertes zum Erstellen eines Wartungsablaufs für eine landwirtschaftliche Arbeitsmaschine. Ferner betrifft die vorliegende Erfindung ein Verfahren zur Durchführung einer geführten Wartung einer landwirtschaftlichen Arbeitsmaschine. Die vorliegende Erfindung betrifft auch eine Servicestation mit einem System zur Datenverarbeitung.

Aus dem Stand der Technik sind Verfahren zur Wartung bzw. zum Reparieren einer landwirtschaftlichen Arbeitsmaschine bekannt.

Die EP 3738421 B1 schlägt hierfür ein Verfahren vor, bei dem in einer Analyseroutine auf Basis von Betriebsdaten der landwirtschaftlichen Arbeitsmaschine eine Ausfalldauerwahrscheinlichkeit oder eine Beschädigungswahrscheinlichkeit der landwirtschaftlichen Arbeitsmaschine oder eines Bauteils der landwirtschaftlichen Arbeitsmaschine ermittelt wird. Auf Basis der Analyseroutine kann eine Lieferroutine initiiert werden.

Nach Lieferung des Ersatzteils ist es in der Regel notwendig, im Servicepunkt Reparaturmaßnahmen einzuleiten. Angesichts der zunehmenden Anzahl und Komplexität der Bauteile sowie der für die Reparatur erforderlichen Werkzeuge werden diese Arbeiten immer anspruchsvoller. Daher besteht ein Bedarf an verbesserten Verfahren, die kostengünstiger, effizienter und kompakter sind.

Die vorliegende Erfindung hat sich zum Ziel gesetzt, ein Verfahren eines Wartungsablaufs für eine landwirtschaftliche Arbeitsmaschine zu entwickeln, das eine schnelle und zuverlässige Instandsetzung in einer Servicestation ermöglicht.

Diese Aufgabe wird durch die hier offenbarten Ausführungsformen gelöst, die insbesondere durch den Gegenstand der unabhängigen Ansprüche definiert sind. Die abhängigen Ansprüche betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Ein Aspekt bezieht sich auf ein computer-implementiertes Verfahren zum Erstellen eines Wartungsablaufs für eine landwirtschaftliche Arbeitsmaschine. Dabei kann eine Servicestation zur Durchführung von Wartungsschritten an der landwirtschaftlichen Arbeitsmaschine bereitstehen. Das Verfahren kann in einem Schritt ein Erfassen einer Wartungsmeldung der landwirtschaftlichen Arbeitsmaschine umfassen. Dabei kann die Wartungsmeldung eine Maschinenkonfiguration umfassen. In einem weiteren Schritt kann das Verfahren ein Ermitteln einer Teileliste basierend auf der Wartungsmeldung umfassen. Dabei kann die Teileliste die für die Wartung benötigten Teile umfassen. Das Verfahren kann ferner in einem weiteren Schritt ein Erstellen eines Wartungsablaufs umfassen. Der Wartungsablauf kann erstellt werden, indem ein Wartungszeitfenster der Servicestation basierend auf einem Abgleich der benötigten Teile mit in der Servicestation vorhandenen Teilen bestimmt wird.

Die landwirtschaftliche Arbeitsmaschine kann speziell für die Ernte von Nutzpflanzen vorgesehen sein. Bei der landwirtschaftlichen Arbeitsmaschine kann es sich beispielsweise um einen Feldhäcksler, Mähdrescher oder Traktor handeln. Die landwirtschaftliche Arbeitsmaschine kann selbstfahrend und/oder autonom ausgeprägt sein. Das Warten bzw. Reparieren der landwirtschaftlichen Arbeitsmaschine kann den Prozess bezeichnen, bei dem die landwirtschaftliche Arbeitsmaschine, die defekt oder nicht optimal funktionsfähig ist, wieder in einen betriebsbereiten und effizienten Zustand versetzt wird.

Das Erstellen des Wartungsablaufs für die landwirtschaftliche Arbeitsmaschine umfasst die systematische Planung, Zusammenstellung und Dokumentation aller erforderlichen Inspektions-, Reinigungs- und Reparaturmaßnahmen, um die Maschine in optimalem Betriebszustand zu halten. Der Wartungsablauf umfasst möglicherweise Prüfprotokolle, Anleitungen und Instruktionen zum Nutzen geeigneter Werkzeuge und Technologien, um die Effizienz und Sicherheit der Wartungsarbeiten zu gewährleisten. Mit anderen Worten kann es sich bei dem Wartungsablauf um einen strukturierten Plan für eine speziell dafür vorgesehene Servicestation handeln.

Die Servicestation kann eine speziell ausgestattete Einrichtung sein, die möglicherweise alle notwendigen Werkzeuge, Ersatzteile und Technologien bereitstellt, um umfassende Inspektions- und Reparaturarbeiten effizient und sicher durchzuführen. Die Servicestation bietet qualifiziertes Personal (d.h. Techniker), das geschult ist, um präventive Wartungsmaßnahmen sowie Diagnose- und Reparaturaufgaben durchzuführen, um die optimale Leistung und Zuverlässigkeit der landwirtschaftlichen Arbeitsmaschine zu gewährleisten.

Die Wartungsschritte können sich auf tatsächliche physikalische Tätigkeiten beziehen, d.h. konkrete, praktische Schritte, die möglicherweise unternommen werden, um eine defekte landwirtschaftliche Arbeitsmaschine in der Servicestation wieder in einen funktionsfähigen Zustand zu versetzen. Dazu zählen beispielsweise Demontagen, Reinigungen und/oder Reparaturen von Defekten. Bei den Wartungsschritten kann es sich um das zumindest teilweise Umsetzen bzw. praktische Anwenden des Wartungsablaufs handeln. Es kann sich bei den Wartungsschritten ferner um Anweisungen oder Protokolle handeln, die an eine Vorrichtung gesendet werden können, damit diese Vorrichtung die in den Wartungsschritten definierten Tätigkeiten ausführen kann.

Die Wartungsmeldung kann eine Benachrichtigung oder Aufzeichnung sein, die möglicherweise auf den Bedarf an Inspektion, Reparatur oder Wartung einer Maschine oder Anlage hinweist, um deren ordnungsgemäßen Betrieb sicherzustellen. Die Wartungsmeldung kann beispielsweise manuell durch den Bediener oder automatisch durch Sensorsysteme und Diagnosetools generiert werden. Das Erfassen der Wartungsmeldung kann sich auf das Empfangen der Wartungsmeldung von der Servicestation beziehen.

Die Maschinenkonfiguration kann die spezifische Anordnung und Einstellung von Komponenten und Parametern der landwirtschaftlichen Arbeitsmaschine umfassen, die möglicherweise ihre Funktionalität und Leistung bestimmen. Die Maschinenkonfiguration kann Informationen wie die eingesetzten Module, Softwareversionen, Steuerungsparameter und Hardware-Optionen umfassen.

Die Teileliste kann eine Auflistung aller notwendigen Ersatzteile und Materialien (d.h. die benötigten Teile), die für die Durchführung der in der Wartungsmeldung beschriebenen Wartungs- oder Reparaturarbeiten erforderlich sind, umfassen. In der Servicestation vorhandene Teile kann sich dagegen auf alle Ersatzteile und Materialien beziehen, die im Lagerbestand einer Servicestation verfügbar sind und bei Wartungs- oder Reparaturarbeiten an der landwirtschaftlichen Arbeitsmaschine eingesetzt werden können. Die vorhandenen Teile sind in der Servicestation sofort zugänglich, um schnelle und effiziente Serviceleistungen zu ermöglichen.

Das Wartungszeitfenster ist beispielsweise ein festgelegter Zeitraum bzw. Zeitintervall, in dem planmäßige Wartungsarbeiten an Maschinen, Anlagen oder Systemen durchgeführt werden können. Das Wartungszeitfenster kann so gewählt werden, dass es den normalen Betriebsablauf so wenig wie möglich stört und die Verfügbarkeit der landwirtschaftlichen Arbeitsmaschine maximiert. Im Wartungszeitfenster stehen möglicherweise die notwendigen Ressourcen wie Personal, Werkzeuge und Ersatzteile zur Verfügung, um die Wartungsarbeiten effizient und effektiv durchzuführen.

Das Wartungszeitfenster kann dabei von einem Bereitstellungszeitraum abgeleitet werden. Der Bereitstellungszeitraum kann dabei der Zeitraum sein, während alle vorhandenen Teilen in der Servicestation vorliegen bzw. bereitstehen. Das Wartungszeitfenster kann einen größeren Zeitraum abdecken als der Bereitstellungszeitraum. Dies ermöglicht es, potenzielle Verzögerungen während der Wartung zu berücksichtigen und zusätzliche Zeit für unvorhergesehene Tätigkeiten einzuplanen. Durch die Erweiterung des Wartungszeitfensters wird möglicherweise sichergestellt, dass alle notwendigen Arbeiten abgeschlossen werden können, ohne den reibungslosen Betrieb zu gefährden. Das Verhältnis zwischen dem Wartungszeitfenster und dem Bereitstellungszeitraum kann 1,1 betragen, vorzugsweise 1,3 und noch bevorzugter 1,5. Dies kann bedeuten, dass im Wartungszeitfenster beispielsweise 10 %, idealerweise 30 % und sogar bis zu 50 % mehr Zeit zur Verfügung steht.

Ein wesentlicher Vorteil dieses Verfahrens besteht möglicherweise darin, die Leistungsfähigkeit und Lebensdauer landwirtschaftlicher Arbeitsmaschinen zu erhalten oder sogar zu verbessern. Das Verfahren kann zu einem störungsfreien landwirtschaftlichen Betrieb beitragen. Darüber hinaus ermöglicht das Verfahren eine automatisierte, zeitlich optimal abgestimmte und/oder kosteneffiziente Wartung, was sowohl den Betrieb als auch die Kostenkontrolle erleichtern könnte.

In einem weiteren Aspekt kann das Verfahren ein Anweisen einer Wartungseinrichtung, zumindest einen Wartungsschritt automatisch durchzuführen, umfassen. Das Anweisen kann in einem Schritt ein Überprüfen der spezifischen Wartungsschritte, die basierend auf der Wartungsmeldung und der Teileliste automatisch durchführbar sind, umfassen. In einem weiteren Schritt kann das Anweisen ein Erstellen und Senden der spezifischen Wartungsschritte an die Wartungseinrichtung umfassen. Das Anweisen kann in einem weiteren Schritt ein Überwachen des Fortschritts der Wartungseinrichtung bei der Durchführung der Wartungsschritte umfassen.

Das automatische Durchführen des Wartungsschritts bedeutet beispielsweise, dass die Wartungseinrichtung den Wartungsschritt autonom und/oder ohne Dazutun eines Bedieners (oder Technikers) umsetzt. Das Überprüfen kann sich auf das Einteilen in manuell und automatisch durchführbare Wartungsschritte beziehen. Die Wartungseinrichtung kann eine spezialisierte Anlage oder ein Bereich der Servicestation sein, der für die Durchführung von Instandhaltungsarbeiten an der landwirtschaftlichen Arbeitsmaschine oder Arbeitsaggregaten vorgesehen ist. Das Überwachen des Fortschritts der Wartungseinrichtung kann kontinuierlich und/oder in festgelegten Intervallen erfolgen.

In einem weiteren Aspekt kann das Verfahren ein Zuordnen eines Technikers zum Wartungsablauf umfassen. Das Zuordnen kann in einem Schritt ein Bestimmen der spezifischen Fähigkeiten und Qualifikationen, die für die Durchführung der im Wartungsablauf vorgesehenen Arbeiten erforderlich sind, umfassen. In einem weiteren Schritt kann das Zuordnen ein Durchsuchen einer Datenbank von verfügbaren Technikern umfassen, um einen passenden Techniker basierend auf Verfügbarkeit, Qualifikation und/oder bisheriger Erfahrung mit ähnlichen Maschinen oder Wartungsaufgaben auszuwählen. In einem weiteren Schritt kann ein Zuordnen eines passenden Technikers zum Wartungsablauf, Benachrichtigen des passenden Technikers über die Zuweisung und Bereitstellen der relevanten Informationen über den Wartungsablauf vorgesehen sein.

Das Bestimmen der spezifischen Fähigkeiten und Qualifikationen kann möglicherweise bedeuten, die notwendigen Kenntnisse und Fertigkeiten zu identifizieren, die für die geplanten Wartungsarbeiten erforderlich sind. Das Durchsuchen der Datenbank von verfügbaren Technikern kann sich auf das Sichten und Filtern von Technikerprofilen beziehen. Das Zuordnen eines passenden Technikers zum Wartungsablauf kann den Prozess beschreiben, bei dem ein geeigneter Techniker den anstehenden Wartungsarbeiten zugeteilt wird. Das Benachrichtigen des passenden Technikers über die Zuweisung beinhaltet das Informieren des Technikers über seine neue Aufgabe und die damit verbundenen Details. Dafür kann beispielsweise ein audiovisuelles Signal verwendet werden. Das Bereitstellen der relevanten Informationen über den Wartungsablauf umfasst möglicherweise das Weitergeben aller wichtigen Anweisungen und Details, die der Techniker benötigt, um die Wartungsarbeiten erfolgreich durchzuführen.

In einem weiteren Aspekt kann das Erstellen des Wartungsablaufs ein Erfassen von in der Servicestation vorhandenen Teile umfassen. Des Weiteren kann das Erstellen des Wartungsablaufs ein Erstellen eines Wartungsablaufs, der eine Vielzahl von Wartungsschritte umfasst, und ein Zuordnen jeweils eines Wartungsschritts zu einem benötigten Teil und zu einem vorhandenen Teil umfassen.

In einem weiteren Aspekt kann das Erfassen der Wartungsmeldung der landwirtschaftlichen Arbeitsmaschine ein Erfassen einer manuelle Wartungsmeldung durch einen Bediener der landwirtschaftlichen Arbeitsmaschine umfassen. Ferner ist es möglich, dass das Erfassen der Wartungsmeldung ein Erfassen einer automatisierten Wartungsmeldung mittels eines Sensorsystems umfasst. Des Weiteren kann das Erfassen der Wartungsmeldung ein Erfassen einer Wartungsmeldung mittels einer Fernüberwachungseinrichtung, die kontinuierlich Daten von der landwirtschaftlichen Arbeitsmaschine sammeln und bei Erkennung von Anomalien und/oder spezifischen Wartungsbedarfen automatisch eine Wartungsmeldung generiert, umfassen.

Die Fernüberwachungseinrichtung kann in Echtzeit Informationen wie Motordrehzahl, Temperatur, Flüssigkeitsstände und andere kritische Messwerte sammeln, die für den fehlerfreien Betrieb der landwirtschaftlichen Arbeitsmaschine entscheidend sind. Sobald ein Sensor eine Abweichung von den normalen Betriebsbedingungen feststellt, beispielsweise eine Überhitzung oder eine ungewöhnliche Vibration, wird diese Anomalie möglicherweise sofort von der Fernüberwachungseinrichtung erkannt. Die Fernüberwachungseinrichtung kann diese Daten verarbeiten und analysiert sie beispielsweise anhand vordefinierter Wartungsalgorithmen, um möglicherweise festzustellen, ob eine Wartungsmaßnahme erforderlich ist. Bei Bedarf kann automatisch eine Wartungsmeldung generiert und an die zuständigen Techniker oder Systeme gesendet werden, um eine schnelle Reaktion und Behebung des potenziellen Problems zu gewährleisten.

Ein weiterer Aspekt bezieht sich auf ein Verfahren zur Durchführung einer geführten Wartung einer landwirtschaftlichen Arbeitsmaschine basierend auf einem Wartungsablauf nach einem der vorhergehenden Aspekte. Das Verfahren kann dabei in einem Schritt ein Bereitstellen des Wartungsablaufs umfassen. In einem weiteren Schritt kann das Verfahren ein Bereitstellen eines landwirtschaftlichen Wartungsassistenten, der den Techniker in Echtzeit durch den Wartungsablauf führt, indem er visuelle und akustische Hinweise zur Verfügung stellt, umfassen. In einem weiteren Schritt kann das Verfahren ein Überwachen des Wartungsfortschritts mittels Sensoren und/oder Feedback-Systemen umfassen.

Der Wartungsassistent unterstützt vorteilhafterweise einen Bediener bzw. Techniker bei der Wartung der landwirtschaftlichen Arbeitsmaschine. Der Wartungsassistent kann auch interaktive Elemente enthalten, wie z.B. Videos oder Diagramme, die dem Techniker zeigen, wie bestimmte Aufgaben korrekt ausgeführt werden. Darüber hinaus ist der Wartungsassistent möglicherweise mit der Fähigkeit ausgestattet, Feedback vom Techniker zu erfassen, um sicherzustellen, dass jede Wartungsaufgabe ordnungsgemäß abgeschlossen wurde, und um bei Bedarf weitere Unterstützung anzubieten.

Ein weiterer Aspekt bezieht sich auf ein System zur Datenverarbeitung für ein Erstellen eines Wartungsablaufs für eine landwirtschaftliche Arbeitsmaschine, umfassend einen Prozessor, der so angepasst und/oder konfiguriert ist, dass er das Verfahren nach einem der vorhergehenden Aspekte ausführt.

Ein weiterer Aspekt bezieht sich auf eine Servicestation mit einem System zur Datenverarbeitung nach einem der vorhergehenden Aspekte.

In der Servicestation kann der Reparaturprozess automatisiert durchgeführt werden. Das in der Servicestation durchgeführte Verfahren kann dabei helfen die landwirtschaftliche Arbeitsmaschine effizienter und genauer zu reparieren. Es ist möglich, dass die Servicestation verschiedene Vorrichtungen oder mobile Elemente (bspw. Drohnen) zur Durchführung des Verfahrens einem der vorhergehenden Aspekte aufweist. Die Servicestation kann beispielsweise einen Wartungsassistenten aufweisen. Dies kann zu einer verbesserten Wartungseffizienz, verringerten Ausfallzeiten und optimaler Nutzung der landwirtschaftlichen Arbeitsmaschine führen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Für den Fachmann ist ersichtlich, dass die vorgestellten Verfahren in Form von Anweisungen in Software oder auf einem Computerprogrammprodukt implementiert oder gespeichert sein können, wobei gespeicherte Anweisungen es ermöglichen, die Schritte nach dem Verfahren auszuführen, wenn eine entsprechende datenverarbeitende Maschine durch die Software gesteuert wird. Mit anderen Worten ist es möglich, dass es sich bei den Verfahren um computer-implementierte Verfahren handelt. Ausführungsformen beziehen sich daher auch auf ein Speichermedium mit darauf gespeicherter Software, die ausgebildet ist, um die vorgestellten Verfahren durchzuführen, wenn die Software auf einer datenverarbeitenden Einrichtung ausgeführt wird.

Weitere Vorteile und Merkmale ergeben sich aus den folgenden Ausführungsformen, die sich zum Teil auf die Figuren beziehen. Die Figuren zeigen die Ausführungsformen nicht immer maßstabsgetreu. Die Abmessungen der verschiedenen Merkmale können insbesondere zur Klarheit der Beschreibung entsprechend vergrößert oder verkleinert sein. Hierzu sind die Figuren zumindest teilweise schematisiert.

Es zeigt:
- Fig. 1: eine schematische Darstellung eines computer-implementierten Verfahrens zum Erstellen eines Wartungsablaufs für eine landwirtschaftliche Arbeitsmaschine gemäß einer Ausführungsform;
- Fig. 2: eine schematische Darstellung einer Servicestation mit einem System zur Datenverarbeitung für ein Erstellen eines Wartungsablaufs für eine landwirtschaftliche Arbeitsmaschine gemäß einer Ausführungsform;
- Fig. 3: eine schematische Darstellung eines Erstellens des Wartungsablaufs, indem ein Wartungszeitfenster der Servicestation basierend auf einem Abgleich der benötigten Teile mit in der Servicestation vorhandenen Teilen bestimmt wird, gemäß einer Ausführungsform; und
- Fig. 4: eine schematische Darstellung eines Wartungsablaufs, der eine Vielzahl von Wartungsschritten umfasst, gemäß einer Ausführungsform.

In der folgenden Beschreibung wird auf die beigefügten Figuren verwiesen, die Teil der Offenbarung sind und bestimmte Aspekte und Ausführungsformen veranschaulichen, unter denen die vorliegende Offenbarung verstanden werden kann. Gleiche Bezugszeichen beziehen sich auf gleiche oder zumindest funktionell oder strukturell ähnliche Merkmale.

Im Allgemeinen gilt eine Offenbarung eines beschriebenen Verfahrens auch für eine entsprechende Vorrichtung zur Durchführung des Verfahrens oder ein entsprechendes System, das ein oder mehrere Vorrichtungen umfasst, und umgekehrt. Wird beispielsweise ein bestimmter Verfahrensschritt beschrieben, so kann eine entsprechende Vorrichtung ein Merkmal zur Durchführung des beschriebenen Verfahrensschrittes enthalten, auch wenn dieses Merkmal in der Abbildung nicht ausdrücklich beschrieben oder dargestellt ist. Wird dagegen beispielsweise ein bestimmtes Gerät auf der Grundlage von Funktionseinheiten beschrieben, kann ein entsprechendes Verfahren einen oder mehrere Schritte zur Durchführung der beschriebenen Funktionalität enthalten, auch wenn diese Schritte in den Abbildungen nicht explizit beschrieben oder dargestellt sind. Ähnlicherweise kann ein System entsprechende Vorrichtungsmerkmal oder Merkmale zur Durchführung eines bestimmten Verfahrensschritts umfassen. Die Merkmale der verschiedenen oben oder unten beschriebenen beispielhaften Aspekte und Ausführungsformen können kombiniert werden, sofern nicht ausdrücklich etwas anderes angegeben ist.

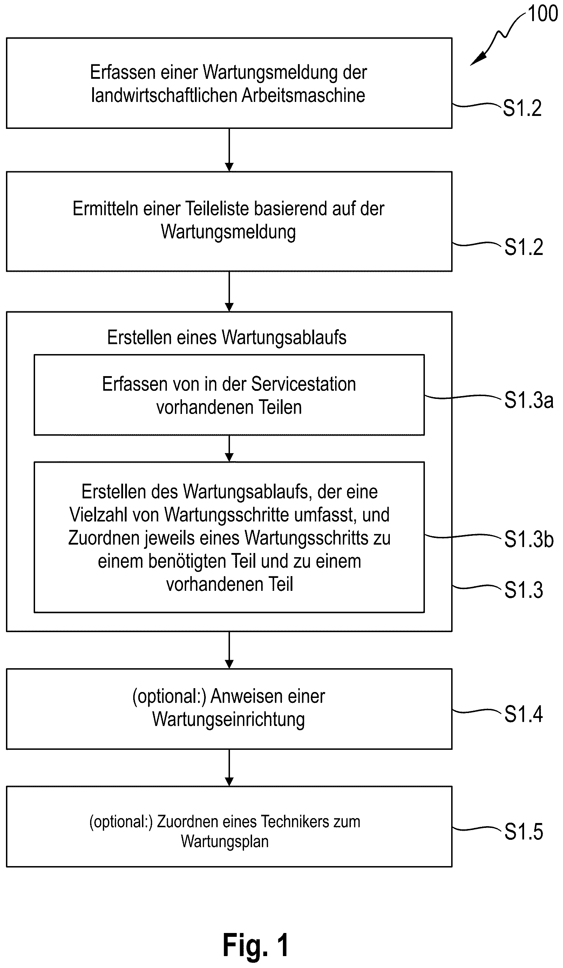

Fig. 1 zeigt eine schematische Darstellung eines computer-implementierten Verfahrens 100 zum Erstellen eines Wartungsablaufs für eine landwirtschaftliche Arbeitsmaschine gemäß einer Ausführungsform.

Die hier nicht abgebildete landwirtschaftliche Arbeitsmaschine ist einer Servicestation zugeordnet. Dabei steht die Servicestation zur Durchführung von Wartungsschritten an der landwirtschaftlichen Arbeitsmaschine bereit, damit die landwirtschaftliche Arbeitsmaschine funktions- und leistungsfähig ist.

Das Verfahren 100 kann in einem Schritt ein Erfassen S1.1 einer Wartungsmeldung der landwirtschaftlichen Arbeitsmaschine umfassen. Das Erfassen der Wartungsmeldung kann dabei einen oder mehrere Unterschritte aufweisen. In einem Schritt kann beispielsweise eine manuelle Wartungsmeldung durch einen Bediener der landwirtschaftlichen Arbeitsmaschine erfasst werden. Mit anderen Worten wird möglicherweise eine Wartungsmeldung vom Bediener manuell, d.h. händisch, in eine Eingabevorrichtung der landwirtschaftlichen Arbeitsmaschine eingegeben. Beispielsweise kann der Bediener eingeben, dass ein Problem am Vorsatzgerät der landwirtschaftlichen Arbeitsmaschine vorliegt und die landwirtschaftliche Arbeitsmaschine somit nicht mehr funktionstüchtig ist. Die manuell eingegebene Wartungsmeldung kann daraufhin an die Servicestation übermittelt werden. Es ist ferner auch möglich, dass eine automatisierte Wartungsmeldung mittels eines Sensorsystems erfasst wird. Dafür kann die Servicestation ein Sensorsystem aufweisen, dass die Arbeitsaggregate der landwirtschaftlichen Arbeitsmaschine überprüft, wenn die landwirtschaftliche Arbeitsmaschine beispielsweise in der Servicestation überprüft wird. Werden Abweichungen zu einem fehlerfreien Betrieb mittels des Sensorsystems detektiert, kann diese Information in einem System zur Datenverarbeitung gespeichert werden. Des Weiteren ist es möglich, dass die Wartungsmeldung mittels einer Fernüberwachungseinrichtung erfasst wird, die kontinuierlich Daten von der landwirtschaftlichen Arbeitsmaschine sammelt und bei Erkennung von Anomalien und/oder spezifischen Wartungsbedarfen automatisch eine Wartungsmeldung generiert.

Das Verfahren 100 kann in einem weiteren Schritt S1.2 ein Ermitteln einer Teileliste basierend auf der Wartungsmeldung umfassen. Aus der Wartungsmeldung kann beispielsweise abgeleitet werden, welche Wartungs- oder Reparaturarbeiten durchgeführt werden müssen. Die Teileliste kann eine Auflistung aller notwendigen Ersatzteile und Materialien (d.h. die benötigten Teile), die für die Durchführung der Wartungs- oder Reparaturarbeiten erforderlich sind, umfassen.

Das Verfahren 100 kann in einem weiteren Schritt S1.3 ein Erstellen eines Wartungsablaufs umfassen. Der Wartungsablauf umfasst möglicherweise Prüfprotokolle, Anleitungen und Instruktionen zum Nutzen geeigneter Werkzeuge und Technologien, um die Effizienz und Sicherheit der Wartungsarbeiten zu gewährleisten. Das Erstellen des Wartungsablaufs kann weitere Unterschritte umfassen. In einem Schritt S1.3a kann ein Erfassen von in der Servicestation vorhandenen Teilen vorgesehen sein. In einem weiteren Schritt S1.3b kann ein Erstellen des Wartungsablaufs vorgesehen sein, wobei der Wartungsablauf eine Vielzahl von Wartungsschritte umfasst. Ferner kann dabei ein Zuordnen jeweils eines Wartungsschritts zu einem benötigten Teil und zu einem vorhandenen Teil vorgesehen sein.

Das Verfahren 100 kann in einem weiteren optionalen Schritt S1.4 ein Anweisen einer Wartungseinrichtung umfassen. Die Wartungseinrichtung kann eine spezialisierte Anlage oder ein Bereich der Servicestation sein, der für die Durchführung von Instandhaltungsarbeiten an der landwirtschaftlichen Arbeitsmaschine oder Arbeitsaggregaten vorgesehen ist. Dabei können die im Wartungsablauf beschriebenen Wartungsarbeiten mittels der Wartungseinrichtung umgesetzt werden.

Das Verfahren 100 kann in einem weiteren optionalen Schritt S1.5 kann ein Techniker zum Wartungsablauf zugeordnet werden. Der Schritt S1.5 kann dabei Unterschritte umfassen. In einem Schritt können die spezifischen Fähigkeiten und Qualifikationen, die für die Durchführung der im Wartungsablauf vorgesehenen Arbeiten erforderlich sind, bestimmt werden. In einem weiteren Schritt kann eine Datenbank von verfügbaren Technikern durchsucht werden, um einen passenden Techniker basierend auf Verfügbarkeit, Qualifikation und/oder bisheriger Erfahrung mit ähnlichen Maschinen oder Wartungsaufgaben auszuwählen. In einem weiteren Schritt kann ein passender Techniker zum Wartungsablauf zugeordnet werden, der passende Techniker über die Zuweisung benachrichtigt und die relevanten Informationen über den Wartungsablauf bereitgestellt werden.

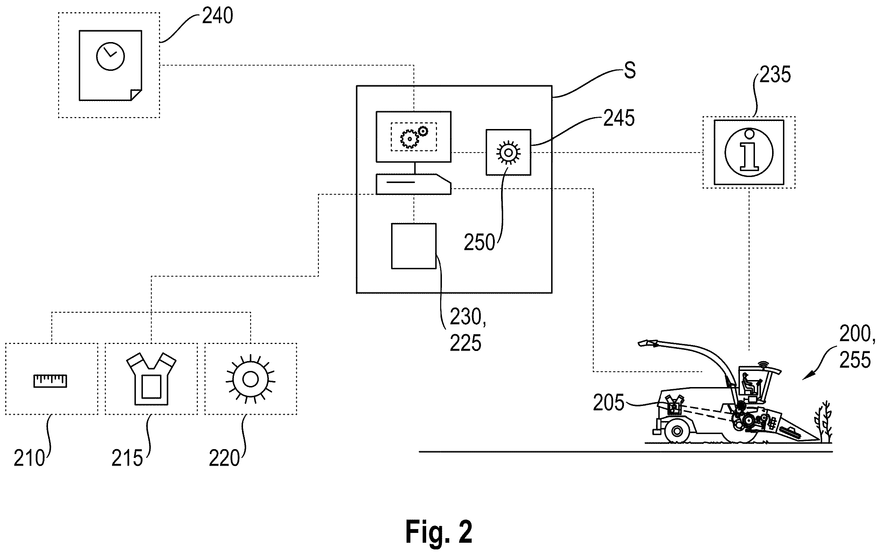

Fig. 2 zeigt eine schematische Darstellung einer Servicestation S mit einem System zur Datenverarbeitung 225 für ein Erstellen eines Wartungsablaufs 240 für eine landwirtschaftliche Arbeitsmaschine 200 gemäß einer Ausführungsform.

Bei der landwirtschaftlichen Arbeitsmaschine 200 handelt es sich in diesem Beispiel um einen Feldhäcksler, der für die Ernte von Nutzpflanzen vorgesehen ist. Die landwirtschaftliche Arbeitsmaschine 200 weist ein defektes Bauteil 205 auf, das in diesem Beispiel eine Motorkomponente ist. Des Weiteren weist die landwirtschaftliche Arbeitsmaschine 200 hier beispielhaft eine Fernüberwachungseinrichtung 255 auf.

Die Fernüberwachungseinrichtung 255 kann kontinuierlich Daten von der landwirtschaftlichen Arbeitsmaschine 200 sammeln und bei Erkennung von Anomalien und/oder spezifischen Wartungsbedarfen automatisch eine Wartungsmeldung 235 generieren. Beispielsweise kann die Fernüberwachungseinrichtung 255 erkennen, dass das defekte Bauteil 205 vorliegt. Basierend auf dieser Information kann eine Wartungsmeldung 235 mittels der Fernüberwachungseinrichtung 255 erfasst werden und an die Servicestation S übermittelt werden. Die Wartungsmeldung 235 kann eine Maschinenkonfiguration der landwirtschaftlichen Arbeitsmaschine 200 umfassen. Die Maschinenkonfiguration kann Informationen wie die eingesetzten Module, Softwareversionen und Arbeitsaggregate (bspw. Art des Vorsatzgeräts) umfassen.

Die Servicestation S weist beispielhaft ein System 230 zur Datenverarbeitung für ein Erstellen eines Wartungsablaufs 240 für die landwirtschaftliche Arbeitsmaschine 200 auf. Das System 230 zur Datenverarbeitung umfasst insbesondere einen Prozessor 225, der so angepasst und/oder konfiguriert ist, dass er das Verfahren 100 ausführen kann. Die Servicestation S kann ferner ein Lager oder Speicherraum aufweisen, in dem die vorhandenen Teilen 210, 215, 220 gelagert werden bzw. direkt verfügbar sind.

Nachdem die Wartungsmeldung 235 der landwirtschaftlichen Arbeitsmaschine 200 erstellt wurde, kann diese an die Servicestation S weitergeleitet werden. Basierend auf der Wartungsmeldung 235 kann eine Teileliste 245 ermittelt werden. Die Teileliste 245 umfasst dabei beispielsweise die für die Wartung benötigten Teile 250. Es kann beispielsweise sein, dass das defekte Bauteil 205 ausgetauscht werden muss. Dabei kann es sich bei dem benötigten Teil 250 um das Bauteil handeln, gegen das das defekte Bauteil 205 ausgetauscht wird, um die landwirtschaftliche Arbeitsmaschine 200 zu reparieren und einen fehlerfreien Betrieb zu gewährleisten. In einem weiteren Schritt kann der Wartungsablaufs 240 erstellt werden, indem ein Wartungszeitfenster der Servicestation S basierend auf einem Abgleich der benötigten Teile 250 mit in der Servicestation S vorhandenen Teilen 210, 215, 220 bestimmt wird.

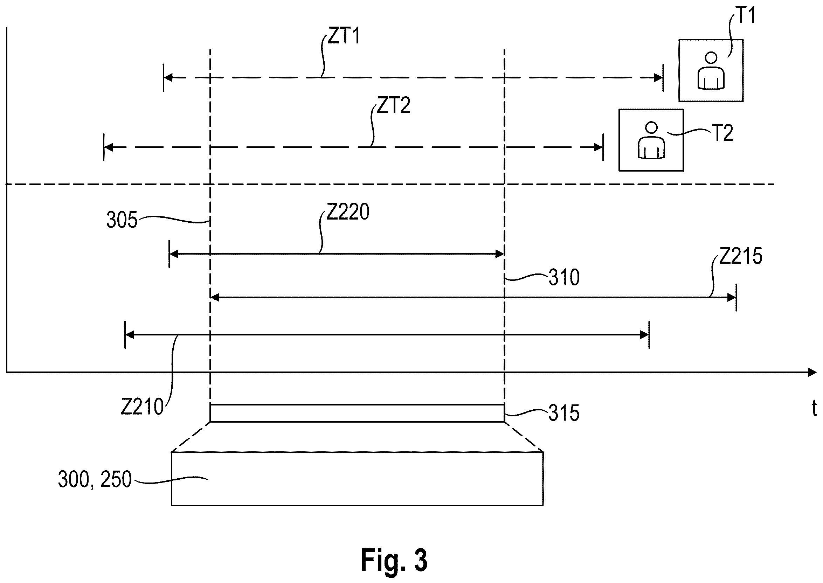

Fig. 3 zeigt eine schematische Darstellung des Erstellens des Wartungsablaufs 240, indem ein Wartungszeitfenster 300 der Servicestation S basierend auf einem Abgleich der benötigten Teile 250 mit in der Servicestation S vorhandenen Teilen 210, 215, 220 bestimmt wird, gemäß einer Ausführungsform.

Die in der Servicestation S vorhandenen Teilen 210, 215, 220 sind jeweils für einen bestimmten Zeitraum Z210, Z215, Z220 verfügbar, d.h. das erste vorhandene Teil 210 ist für einen ersten Zeitraum Z210, das zweite vorhandene Teil 215 ist für einen ersten Zeitraum Z215 und das dritte vorhandene Teil 220 ist für einen dritten Zeitraum Z220 verfügbar. Die Zeiträume Z210, Z215, Z220, d.h. deren Beginn- und Endzeitpunkte, können ermittelt werden und in gespeicherter Form als Information in der Servicestation S vorhanden sein. In ähnlicher Weise können die Verfügbarkeiten der Techniker T1 und T2 als Zeiträume ZT1 und ZT2 als Information abrufbar gespeichert sein.

Das Wartungszeitfenster 300 kann dabei von einem Bereitstellungszeitraum 315 abgeleitet werden. Der Bereitstellungszeitraum 315 kann dabei der Zeitraum sein, während dem alle vorhandenen Teilen 210, 215, 220 in der Servicestation S vorliegen bzw. bereitstehen.

Der Beginnzeitpunkt 305 des Bereitstellungszeitraums 315 kann bestimmt werden, indem die Beginnzeitpunkte der Zeiträume Z210, Z215, Z220 abgeglichen werden und beispielsweise der Späteste dieser Zeitpunkte als Beginnzeitpunkt des Bereitstellungszeitraums 315 festgelegt wird. In diesem Fall handelt es sich um den Beginnzeitpunkt des zweiten Zeitraums Z215. In analogerweise kann der Endzeitpunkt 3010 des Bereitstellungszeitraums 315 bestimmt werden, indem die Endzeitpunkte der Zeiträume Z210, Z215, Z220 abgeglichen werden und beispielsweise der Frühste dieser Zeitpunkte als Endzeitpunkt des Bereitstellungszeitraums 315 festgelegt wird. Dabei können selbstverständlich auch die Verfügbarkeiten der Techniker T1 und T2 berücksichtigt werden. Im vorliegenden Fall sind beide Techniker T1 und T2 beispielhaft über den gesamten Zeitraum des Bereitstellungszeitraums 315 verfügbar. Es ist ferner möglich, dass die Techniker T1 und T2 jeweils einem Wartungsschritt oder einem Bauteil zugewiesen werden. Beispielsweise kann der erste Techniker T1 dem ersten vorhandenen Bauteil 210 und der zweite Techniker T2 dem zweiten vorhandenen Bauteil 215 zugewiesen werden.

Das Wartungszeitfenster 300 kann einen größeren Zeitraum abdecken als der Bereitstellungszeitraum 315. Dies ermöglicht es, potenzielle Verzögerungen während der Wartung zu berücksichtigen und zusätzliche Zeit für unvorhergesehene Tätigkeiten einzuplanen.

Durch die Erweiterung des Wartungszeitfensters wird sichergestellt, dass alle notwendigen Arbeiten abgeschlossen werden können, ohne den reibungslosen Betrieb zu gefährden. Das Verhältnis zwischen dem Wartungszeitfenster 300 und dem Bereitstellungszeitraum 315 kann 1,1 betragen, vorzugsweise 1,3 und noch bevorzugter 1,5. Dies kann bedeuten, dass im Wartungszeitfenster 300 beispielsweise 10 %, idealerweise 30 % und sogar bis zu 50 % mehr Zeit zur Verfügung steht.

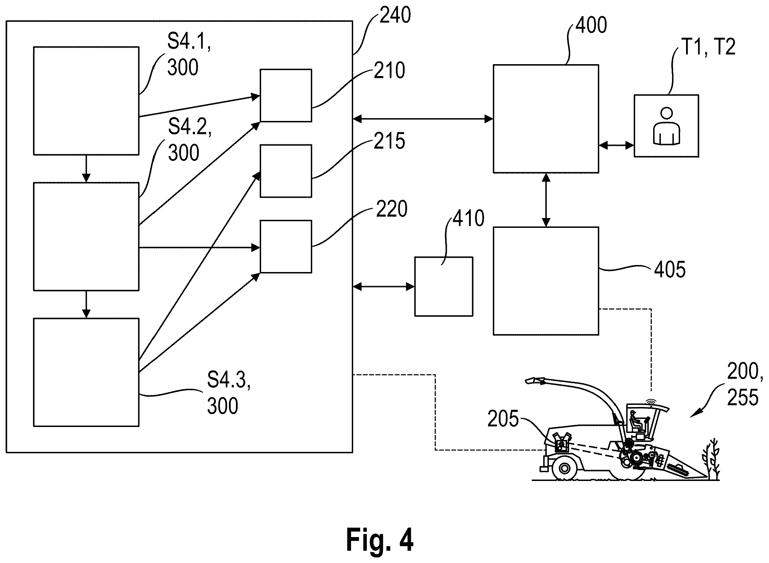

Fig. 4 zeigt eine schematische Darstellung eines Wartungsablaufs 240, der eine Vielzahl von Wartungsschritten S4.1, S4.2, S4.3 umfasst, gemäß einer Ausführungsform.

Basierend auf dem Wartungsablauf 240 kann eine geführte Wartung der landwirtschaftlichen Arbeitsmaschine 200 durchgeführt werden. Dabei kann der Wartungsablaufs 240 zunächst bereitgestellt und dabei die Wartungsschritte S4.1, S4.2, S4.3 bestimmt werden. Die Wartungsschritte S4.1, S4.2, S4.3 können mittels Wartungszeitfenster 300 definiert werden, d.h. die zeitliche Länge der Wartungsschritte S4.1, S4.2, S4.3 ist möglicherweise jeweils durch ein Wartungszeitfenster 300 bestimmt. Jeder der Wartungsschritte S4.1, S4.2, S4.3 ist einem oder mehreren vorhandenen Teilen 210, 215, 220 zugeordnet.

Ein landwirtschaftlicher Wartungsassistent 400 kann bereitgestellt werden, der die Techniker T1 und T2 in Echtzeit durch den Wartungsablauf 240 führt. Dabei liefert er sowohl visuelle als auch akustische Hinweise, um eine präzise und effiziente Durchführung der Wartungsschritte S4.1, S4.2, S4.3 zu gewährleisten. Der Fortschritt der Wartung wird kontinuierlich überwacht, indem Sensoren 405 und/oder Feedback-Systeme eingesetzt werden, um eine direkte Rückmeldung zu erhalten und den Status der Arbeiten zu überprüfen. Zusätzlich besteht die Möglichkeit, eine umfassende Dokumentationserstellung 410 durchzuführen, die alle relevanten Informationen und Fortschritte der Wartung detailliert festhält.

### Bezugszeichenliste

- 100: Computer-implementiertes Verfahren
- 200: landwirtschaftliche Arbeitsmaschine
- 205: benötigten Teile
- 210: erstes vorhandenes Teil
- 215: zweites vorhandenes Teil
- 220: drittes vorhandenes Teil
- 225: Prozessor
- 230: System zur Datenverarbeitung
- 235: Wartungsmeldung
- 240: Wartungsablauf
- 245: Teileliste
- 250: benötigte Teile

- 300: Wartungszeitfenster
- 305: Beginnzeitpunkt des Bereitstellungszeitraums
- 310: Endzeitpunkt des Bereitstellungszeitraums
- 315: Bereitstellungszeitraum

- 400: landwirtschaftlicher Wartungsassistent
- 405: Sensoren
- 410: Dokumentationserstellung

- S: Servicestation
- T1: erster Techniker
- T2: zweiter Techniker
- S1.1: Erfassen einer Wartungsmeldung der landwirtschaftlichen Arbeitsmaschine
- S1.2: Ermitteln einer Teileliste basierend auf der Wartungsmeldung
- S1.3: Erstellen eines Wartungsablaufs
- S1.4: Anweisen einer Wartungseinrichtung
- S1.5: Zuordnen eines Technikers zum Wartungsablauf

- S4.1: Wartungsschritt
- S4.2: Wartungsschritt
- S4.3: Wartungsschritt

## Patentansprüche

1. Computer-implementiertes Verfahren (100) zum Erstellen eines Wartungsablaufs (240) für eine landwirtschaftliche Arbeitsmaschine (200), wobei eine Servicestation (S) zur Durchführung von Wartungsschritten an der landwirtschaftlichen Arbeitsmaschine (200) bereitsteht,
das Verfahren (100) umfassend:
Erfassen einer Wartungsmeldung (235) der landwirtschaftlichen Arbeitsmaschine (200), wobei die Wartungsmeldung (235) eine Maschinenkonfiguration umfasst;
Ermitteln einer Teileliste (245) basierend auf der Wartungsmeldung (235), wobei die Teileliste (245) die für die Wartung benötigten Teile (250) umfasst; und
Erstellen eines Wartungsablaufs (240), indem ein Wartungszeitfenster (300) der Servicestation (S) basierend auf einem Abgleich der benötigten Teile (250) mit in der Servicestation (S) vorhandenen Teilen (210, 215, 220) bestimmt wird.

2. Verfahren (100) nach Anspruch 1, wobei der Wartungsablauf (240) eine Vielzahl von Wartungsschritte aufweist,
das Verfahren (100) umfassend:
Anweisen einer Wartungseinrichtung, zumindest einen Wartungsschritt automatisch durchzuführen,
wobei das Anweisen umfasst:
Überprüfen der spezifischen Wartungsschritte, die basierend auf der Wartungsmeldung (235) und der Teileliste automatisch durchführbar sind;
Erstellen und Senden der spezifischen Wartungsschritte an die Wartungseinrichtung; und
Überwachen des Fortschritts der Wartungseinrichtung bei der Durchführung der Wartungsschritte.

3. Verfahren (100) nach Anspruch 1 oder 2,
das Verfahren (100) umfassend:
Zuordnen eines Technikers zum Wartungsablauf (240),
wobei das Zuordnen umfasst:
Bestimmen der spezifischen Fähigkeiten und Qualifikationen, die für die Durchführung der im Wartungsablauf (240) vorgesehenen Arbeiten erforderlich sind;
Durchsuchen einer Datenbank von verfügbaren Technikern (T1, T2), um einen passenden Techniker (T1, T2) basierend auf Verfügbarkeit, Qualifikation und/oder bisheriger Erfahrung mit ähnlichen Maschinen oder Wartungsaufgaben auszuwählen; und
Zuordnen eines passenden Technikers (T1, T2) zum Wartungsablauf (240), Benachrichtigen des passenden Technikers (T1, T2) über die Zuweisung und Bereitstellen der relevanten Informationen über den Wartungsablauf (240).

4. Verfahren (100) nach einem der vorhergehenden Ansprüche,
wobei das Erstellen des Wartungsablaufs (240) umfasst:
Erfassen von in der Servicestation (S) vorhandenen Teilen (210, 215, 220); und
Erstellen eines Wartungsablaufs (240), der eine Vielzahl von Wartungsschritte (S4.1, S4.2, S4.3) umfasst, und Zuordnen jeweils eines Wartungsschritts (S4.1, S4.2, S4.3) zu einem benötigten Teil (250) und zu einem vorhandenen Teil (210, 215, 220).

5. Verfahren (100) nach einem der vorhergehenden Ansprüche,
wobei das Erfassen der Wartungsmeldung (235) der landwirtschaftlichen Arbeitsmaschine (200) zumindest einen der folgenden Schritte umfasst:
Erfassen einer manuelle Wartungsmeldung (235) durch einen Bediener der landwirtschaftlichen Arbeitsmaschine (200);
Erfassen einer automatisierten Wartungsmeldung (235) mittels eines Sensorsystems; oder
Erfassen einer Wartungsmeldung (235) mittels einer Fernüberwachungseinrichtung (255), die kontinuierlich Daten von der landwirtschaftlichen Arbeitsmaschine (200) sammeln und bei Erkennung von Anomalien und/oder spezifischen Wartungsbedarfen automatisch eine Wartungsmeldung (235) generiert.

6. Verfahren zur Durchführung einer geführten Wartung einer landwirtschaftlichen Arbeitsmaschine (200) basierend auf einem Wartungsablauf (240) nach einem der vorhergehenden Ansprüche, umfassend:
Bereitstellen des Wartungsablaufs (240);
Bereitstellen eines landwirtschaftlichen Wartungsassistenten (400), der den Techniker (T1, T2) in Echtzeit durch den Wartungsablauf (240) führt, indem er visuelle und akustische Hinweise zur Verfügung stellt; und
Überwachen des Wartungsfortschritts (S4.1, S4.2, S4.3) mittels Sensoren (405) und/oder Feedback-Systemen.

7. System (230) zur Datenverarbeitung für ein Erstellen eines Wartungsablaufs (240) für eine landwirtschaftliche Arbeitsmaschine (200), umfassend einen Prozessor (225), der so angepasst und/oder konfiguriert ist, dass er das Verfahren (100) nach einem der vorherigen Ansprüche ausführt.

8. Servicestation (S) mit einem System (230) zur Datenverarbeitung nach Anspruch 7.
